# EUROPÄISCHE PATENTSCHRIFT

(11) **EP 3 712 453 B1**
(45) Veröffentlichungstag und Bekanntmachung des Hinweises auf die Patenterteilung: **03.11.2021**
(21) Anmeldenummer: 19163960.8
(22) Anmeldetag: 20.03.2019
(51) Int. Cl.: F16D 3/78, F16D 3/79

(54) **KUPPLUNG MIT VERBESSERTER BUCHSE-RING-VERBINDUNG**
COUPLING WITH IMPROVED SLEEVE-RING CONNECTION
ACCOUPLEMENT POURVU DE RACCORDEMENT DOUILLE-BAGUE AMÉLIORÉ

(43) Veröffentlichungstag der Anmeldung: 23.09.2020
(73) Patentinhaber: Flender GmbH, 46395 Bocholt (DE)
(72) Erfinder: Sondermann, Niklas, 46499 Hamminkeln (DE); Kropp, Michael, 48703 Stadtlohn (DE)
(74) Vertreter: Michalski Hüttermann & Partner Patentanwälte mbB

(56) Entgegenhaltungen:
- DE-A1- 19 709 950
- DE-A1- 19 742 361
- DE-C1- 4 227 476
- DE-U1-202011 110 002
- US-A- 4 055 966
- US-B2- 7 871 331

## Beschreibung

Die Erfindung betrifft eine Kupplung mit einem Lamellenpaket, bei dem zwischen einer Buchse und einem Ring in einer Montageöffnung eine verbesserte Verbindung ausgebildet ist. Die Erfindung betrifft auch ein Herstellungsverfahren für eine entsprechende Kupplung. Ferner betrifft die Erfindung eine Wellenanordnung, die über eine entsprechende Kupplung verfügt. Gleichermaßen betrifft die Erfindung eine Industrieapplikation, die mit einer solchen Wellenanordnung ausgestattet ist.

Die Druckschrift US 2010/099505 A1 offenbart eine Lamellenkupplung, die ein Lamellenpaket umfasst, das zwischen zwei Kupplungshälften angebracht ist. Das Lamellenpaket ist über Bolzen mit Flanschen der Kupplungshälften verbunden, die in Hülsen aufgenommen sind. Die Hülsen sind im Wesentlichen als Kragenhülsen ausgebildet, die durch ein Verpressen mit dem Lamellenpaket verbunden sind.

Aus DE 36 21 188 A1 ist eine elastische Kupplung bekannt, die über eine Mehrzahl an Scheibenkörpern verfügt, die mit einer Nabe verbunden sind. Die Scheibenkörper weisen dazu in einem radial inneren Bereich fluchten angeordnete Öffnungen auf, in denen jeweils ein Niet angebracht ist. Der Niet ist dabei mit der Nabe verbunden und bindet so die Scheibenkörper an die Nabe an. In einem radial äußeren Bereich werden die Scheibenkörper von einer Umbördelung zusammengehalten.

Weitere Beispiele für Kupplungen sind aus DE 197 09 950 A1, US 4 055 966 A, DE 20 2011 110002 U1, DE 197 42 361 A1 und DE 42 27 476 C1 bekannt.

In einer Vielzahl an Industrieanwendungen besteht Bedarf an leistungsfähigen Kupplungen, die kompakt und zuverlässig sind, wirtschaftlich herstellbar und einfach zu warten. Der Erfindung liegt die Aufgabe zugrunde, eine Kupplung bereitzustellen, die in zumindest einem der beschriebenen Punkte eine Verbesserung bietet.

Die Aufgabenstellung wird durch eine erfindungsgemäße Kupplung gelöst. Die Kupplung umfasst eine Mehrzahl an Lamellen, die dazu ausgebildet sind, im Betrieb der Kupplung Zugkräfte zu übertragen und so Drehmoment von einer ersten Kupplungsseite auf eine zweite Kupplungsseite zu übertragen. Die Lamellen sind gebündelt, also zu Lamellenpaketen zusammengefasst. In den Lamellen sind Lamellenbohrungen ausgebildet und die Lamellen im Lamellenpaket so angeordnet, dass die Lamellenbohrungen fluchten. Dadurch wird im Lamellenpaket zumindest eine Montageöffnung gebildet, über die das Lamellenpaket mit der ersten oder zweiten Kupplungsseite verbindbar ist. Die Verbindung zwischen dem Lamellenpaket und einer Kupplungsseite wird beispielsweise durch einen Bolzen gewährleistet. In der mindestens eine Montageöffnung ist eine Buchse aufgenommen, durch die sich im montierten Zustand ein Bolzen erstreckt. Die Buchse weist dementsprechend zumindest einen hohlzylindrischen Abschnitt auf. An einem ersten Endbereich, also an mindestens einem Ende des hohlzylindrischen Abschnitts, ist die Buchse formschlüssig mit einem Ring verbindbar. Die Buchse weist im Endbereich eine Form auf, die durch eine Montagekraft rückstellfähig, also im Wesentlichen elastisch, verformbar ist, und so ein Formschluss mit dem Ring erzeugt wird. Der so hervorgerufene Formschluss verhindert ein Trennen des Rings von der Buchse in eine Axialrichtung. Der Ring ist derart ausgebildet, dass dieser im montierten Zustand die Form der Buchse im jeweiligen ersten Endbereich im Wesentlichen zur Form einer Kragenbuchse ergänzt.

Eine formschlüssige Verbindung zwischen der Buchse und dem Ring erlaubt es, deren Montage und gegebenenfalls auch Demontage in einfacher Weise mit niedrigen Montagekräften durchzuführen. Dementsprechend können einfachere Werkzeuge genutzt werden, oder mit relativ geringem Aufwand mehrere Ringe mit Buchsen gleichzeitig verbunden werden. Folglich kann die Herstellung einer erfindungsgemäßen Kupplung schnell und kosteneffizient erfolgen. Durch die reduzierten Montagekräfte kann eine Demontage gleichermaßen einfach durchgeführt werden, was die Wartungsfreundlichkeit in einer Vielzahl an industriellen Applikationen steigert.

In der beanspruchten Kupplung sind die Buchse und der Ring zu einem lösbaren Verbinden verformbar ausgebildet.

Bei einem Montage- oder Demontagevorgang kann also die Buchse derart verformt werden, dass der Ring über die Buchse geschoben werden kann. Dementsprechend kann auch der Ring beim Aufschieben auf die Buchse verformt werden. Ebenso ist auch eine Kombination von beidem möglich. Unter einem Verformen ist dabei ein im Wesentlichen elastisches Verformen zu verstehen, bei dem plastische Verformungsanteile bei einer einmaligen Montage vernachlässigbar sind. Dadurch kann eine Rückstellkraft im Ring und/oder der Buchse hervorgerufen werden.

Des Weiteren kann in einem montierten Zustand zwischen der Buchse und dem Ring ein Kraftschluss und ein Formschluss vorliegen. Ein Kraftschluss kann beispielsweise zwischen einer Innenfläche des Rings und einer Außenfläche im Endbereich der Buchse vorliegen. Ein Formschluss wiederum kann beispielsweise durch eine Klippverbindung zwischen dem Ring und der Buchse hergestellt werden. Ein Formschluss weist eine reduzierte Relaxationsneigung auf und bietet so dauerhaft ein hohes Maß an Haltekraft. Eine Klippverbindung kann beispielsweise durch eine Rastnase an der Außenfläche der Buchse im entsprechenden Endbereich oder and er Innenfläche des Rings hergestellt werden. Ferner kann korrespondierend zur Rastnase an der Buchse oder dem Ring eine Rastnut ausgebildet sein. Derartige Klippverbindungen sind in einfacher Weise derart auslegbar, dass eine angestrebte Montagekraft einstellbar ist. Dabei können die sonstigen mechanischen Anforderungen an die Buchse bzw. den Ring unbeeinträchtigt bleiben. Dementsprechend ist die beanspruchte Lösung für eine Vielzahl an Anwendungsfällen einfach anpassbar. Des Weiteren erfolgt ein Einrasten einer Klippverbindung beim Montieren selbsttätig, was den Montagevorgang weiter vereinfacht. Darüber hinaus sind bei der Montage des Lamellenpakets der beanspruchten Kupplung größenspezifischen Werkzeuge, wie beispielsweise Anpresskegel zum Kaltverformen, entbehrlich.

In einer weiteren Ausführungsform der beanspruchten Kupplung können die Buchse und der Ring aus einem metallischen Werkstoff hergestellt sein, beispielsweise einem Stahl, einer Stahllegierung, Kupfer, einer Kupferlegierung, Aluminium, oder einer Aluminiumlegierung. Metallische Werkstoffe bieten ein hohes Maß an Festigkeit und sind in erprobter Weise bearbeitbar. Ein metallischer Werkstoff ist insbesondere derart bearbeitbar, dass die Buchse und/oder der Ring im Bereich der formschlüssigen Verbindung, beispielsweise an der Innenfläche des Rings oder einem Endbereich der Buchse, derart weich sind, dass eine reduzierte Montagekraft erzielbar ist. Gleichzeitig sind die Buchse und/oder der Ring derart auslegbar, dass sie ansonsten ein hohes Maß an Stabilität bieten. Infolgedessen wird die reduzierte Montagekraft nicht zulasten der mechanischen Beanspruchbarkeit oder Zuverlässigkeit der Kupplung erzielt. Weiter alternativ kann der Ring einem Kunststoff hergestellt sein. Kunststoffe bieten eine geringe Dichte und sind kosteneffizient. Kunststoffe sind ferner elektrisch isolierend und erlauben es so, über die Kupplung miteinander verbundene Komponenten zu schützen, und so das Prinzip der Funktionsintegration zu verwirklichen.

In einer weiteren Ausführungsform der beanspruchten Kupplung weist die Buchse einseitig einen Kragen auf, der angeformt ist. Die Buchse kann somit als Kragenbuchse ausgebildet sein. Ein solcher Kragen erlaubt es, die Buchse einseitig gegen das Lamellenpaket abzustützen und durch Anbringen des Rings an dem Endbereich, der dem Kragen abgewandt ist, die Montage zu vervollständigen. Die Anzahl an erforderlichen Komponenten ist durch die Verwendung einer Buchse mit Kragen und eines Rings minimiert. Infolgedessen ist auch die Anzahl an Montageschritten reduziert.

Alternativ kann die Buchse auch in einem ersten und einem zweiten Endbereich, also beidseitig, mit je einem Ring formschlüssig verbindbar ausgebildet sein. Zur Montage wird dementsprechend eine Buchse mit zwei Ringen formschlüssig verbunden. Die formschlüssigen Verbindungen zwischen der Buchse und den Ringen kann dabei im ersten und zweiten Endbereich auf gleiche Weise hergestellt werden. Dazu können Ringe, die am ersten und zweiten Endbereich der Buchse angebracht sind, baugleich, also untereinander austauschbar, ausgebildet sein. Dadurch ist die Anzahl an unterschiedlichen Bauteilen auch reduziert. Ferner stellt eine Buchse ohne Kragen ein relativ einfaches Bauteil dar, das schnell und kosteneffizient herstellbar ist. Infolgedessen kann die beanspruchte Lösung in besonders wirtschaftlicher Weise umgesetzt werden.

Darüber hinaus kann im montierten Zustand zwischen der Buchse und dem Ring ein Zwischenring angeordnet sein. Der Zwischenring dient dabei zur Herstellung des Kraftschlusses und/oder des Formschlusses zwischen der Buchse und dem Ring. Der Zwischenring kann beispielsweise aus einem Elastomer hergestellt sein und bei der Montage auf dem entsprechenden Endbereich der Buchse oder an der Innenfläche des Rings angeordnet werden. Insbesondere kann der Zwischenring in einer Rastnut positioniert sein, die im Endbereich der Buchse bzw. an der Innenfläche des Rings ausgebildet ist. Zusätzlich kann der Zwischenring als Dichtung dienen. Der Zwischenring ist gezielt als Verschleißteil einsetzbar, so dass bei einer Wiedermontage der Kupplung eine Schädigung oder Degradation der Buchse und/oder des Rings ausschließbar ist. Der Zwischenring kann aus einem metallischen Werkstoff hergestellt sein oder aus einem Kunststoff, beispielsweise einem Elastomer. Zwischenringe aus einem metallischen Werkstoff sind mit hoher Präzision herstellbar und sind langlebig. Kunststoffe hingegen sind kosteneffizient und deshalb besonders als Verschleißteile geeignet.

Ferner kann der Ring mit der Buchse mittels einer Montagekraft, also einer Andrückkraft, von bis zu 15 kN, bevorzugt von bis zu 10 kN, weiter bevorzugt von bis zu 8 kN, besonders bevorzugt von bis zu 6,5 kN verbunden werden. Derartige Montagekräfte können bereits beispielsweise durch einfache hydraulische Werkzeuge oder elektrisch betätigte Maschinen ausgeübt werden. Die beanspruchte Lösung kann, wie oben skizziert, in einfacher Weise in puncto Montagekraft konstruktiv ausgelegt werden. Dementsprechend werden an die Herstellung der beanspruchten Kupplung nur geringe Anforderungen gestellt.

Darüber hinaus kann die Buchse mit einer Ausrichtnut und/oder einer Ausrichtfeder versehen sein. Durch die Ausrichtnut bzw. Ausrichtfeder wird die Rastnase oder Rastnut im Endbereich der Buchse, in Umfangsrichtung betrachtet, unterbrochen. Alternativ oder ergänzend kann der Ring mit einer Ausrichtnut und/oder Ausrichtfeder versehen sein. Insbesondere können zumindest eine Ausrichtnut und zumindest eine Ausrichtfeder des Rings bzw. der Buchse zueinander korrespondierend ausgebildet sein. Dadurch wird im montierten Zustand eine exakte Winkelposition des Rings gegenüber der Buchse gewährleistet. Ferner können die Ausrichtnut und/oder Ausrichtfeder zwischen einer Rastnut und einer Rastnase im Endbereich der Buchse angeordnet sein. Dadurch unterbrechen die Ausrichtnut bzw. Ausrichtfeder entlang der Umfangsrichtung eine alternierende Abfolge zumindest einer Rastnut und einer Rastfeder. Korrespondierend hierzu kann der Ring an seiner Innenfläche auch mit zumindest einer Rastnut und einer Rastfeder ausgestattet sein, zwischen denen eine Ausrichtnut oder Ausrichtfeder positioniert sind.

Die zugrundeliegende Aufgabenstellung wird auch durch das erfindungsgemäße Herstellungsverfahren gelöst. Das erfindungsgemäße Verfahren umfasst einen ersten Schritt, in dem ein Lamellenpaket bereitgestellt wird, das eine Mehrzahl an Montageöffnungen aufweist, von denen zumindest mehrere mit einer Buchse zu versehen sind. In einem zweiten Schritt werden die Buchsen in die entsprechenden Montageöffnungen eingesetzt. Es wird auch ein dritter Verfahrensschritt durchgeführt, in dem jede der Buchsen mit einem Ring verbunden wird. Dazu werden die Ringe an die Buchsen angedrückt. Erfindungsgemäß wird zwischen den Buchsen und den jeweiligen Ringen eine formschlüssige Verbindung hergestellt. Durch das erfindungsgemäße Verfahren sind Lamellenpakete für Kupplungen gemäß zumindest einer der oben skizzierten Ausführungsformen herstellbar. Die Merkmale der beanspruchten Kupplungen sind deshalb auf das erfindungsgemäße Verfahren übertragbar.

Erfindungsgemäß werden im dritten Verfahrensschritt die Ringe im Wesentlichen gleichzeitig mit den jeweiligen Buchsen formschlüssig verbunden, wobei die Buchsen aus einem metallischen Werkstoff hergestellt sind. Dazu können beispielsweise mehrere Ringe mit einem Stempel an die Buchsen angedrückt werden. Ebenso können auch die Buchsen durch einen Stempel an die Ringe angedrückt werden. Die Herstellung der Kupplung wird durch das im Wesentlichen gleichzeitige Verbinden von Buchsen und Ringen beschleunigt und vereinfacht. Insbesondere wird dadurch die Wirtschaftlichkeit bei der Herstellung von Kupplungen mit einer hohen Anzahl an Montageöffnungen gesteigert. Darüber hinaus sind beim beanspruchten Verfahren größenspezifische Werkzeug, wie beispielsweise Anpresskegel zum Kaltverformen, entbehrlich. Infolgedessen ist das beanspruchte Verfahren mit einem reduzierten Werkzeugaufwand schnell durchführbar. Ferner können Lamellenpakete unterschiedlicher Größen schnell hintereinander ohne Umrüstaufwand produziert werden. Das beanspruchte Verfahren ist daher flexibel, was eine erhöhte Produktivität bei der Herstellung von Kupplungen bietet.

Erfindungsgemäß ist zumindest eine der formschlüssigen Verbindungen, die zwischen den Buchsen und den entsprechenden Ringen ausgebildet wird, als lösbare Verbindung ausgebildet. Unter einer lösbaren Verbindung zwischen der Buchse und dem Ring ist eine Verbindung zu verstehen, nach deren Lösen die Buchse und/oder der Ring wiederverwendbar ist. Dies kann beispielsweise eine Klippverbindung sein. Durch eine lösbare Verbindung können die nach dem beanspruchten Verfahren hergestellten Kupplungen besonders einfach inspiziert und repariert werden.

Ebenso wird die zugrundeliegende Aufgabenstellung durch die erfindungsgemäße Wellenanordnung gelöst. Die Wellenanordnung umfasst eine erste Welle, die mit einer zweiten Welle über eine Kupplung verbunden ist. Durch die Kupplung wird eine Übertragung von Drehmoment von der ersten auf die zweite Welle oder umgekehrt gewährleistet. Die Kupplung, die die erste und zweite Welle verbindet, ist dabei nach einer der oben skizzierten Ausführungsformen ausgebildet. Durch die Verwendung der beanspruchten Kupplung ist die erfindungsgemäße Wellenanordnung kosteneffizient herstellbar, einfach inspizierbar und reparierbar.

Gleichermaßen wird die eingangs dargestellte Aufgabenstellung durch die erfindungsgemäße Industrieapplikation gelöst. Die Industrieapplikation umfasst eine Antriebseinheit, die beispielsweise als Elektromotor, Verbrennungsmotor oder Hydraulikmotor ausgebildet sein kann. Die Antriebseinheit verfügt über eine erste Welle, über die eine von der Antriebseinheit erzeugt Antriebsleistung bereitgestellt wird. Ebenso weist die Industrieapplikation eine mechanische Anwendung auf, die beispielweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung Müllpresse oder Schrottpresse ausgebildet sein kann. Die mechanische Anwendung weist eine zweite Welle auf, die dazu ausgebildet ist, die für den Betrieb notwendige Antriebsleistung der mechanischen Anwendung zumindest teilweise zuzuführen. Die erste und zweite Welle sind über eine Kupplung drehmomentübertragend miteinander verbunden. Infolgedessen wird von der Antriebseinheit bereitgestellte Antriebsleistung der mechanischen Anwendung zugeführt. Die erste und zweite Welle und die Kupplung gehören zu einer Wellenanordnung, die erfindungsgemäß nach einer der oben dargestellten Ausführungsformen ausgebildet ist. Die durch die Wellenanordnung erzielten Vorteile werden so auf den Betrieb der Industrieapplikation übertragen. Insbesondere ermöglicht die einfache Reparierbarkeit der Kupplung es, die Stillstandzeiten der Industrieapplikation zu minimieren und so deren Wirtschaftlichkeit zu steigern.

Die zugrundeliegende Aufgabenstellung wird auch durch eine erfindungsgemäße Windkraftanlage gelöst. Die Windkraftanlage weist einen Rotor auf, der drehmomentübertragend mit einer Rotorwelle verbunden ist, die in einer Gondel aufgenommen ist. Die Rotorwelle gehört zu einem Antriebsstrang, der auch einen Generator umfasst. Zusätzlich kann mechanisch zwischen den Generator und die Rotorwelle ein Getriebe, insbesondere ein mehrstufiges Planetengetriebe, geschaltet sein, das dann auch zum Antriebsstrang gehört. Zwischen der Rotorwelle und dem Generator ist erfindungsgemäß eine Kupplung angeordnet, die Komponenten des Antriebsstrangs drehmomentübertragend verbindet. Die Kupplung kann dabei beispielsweise unmittelbar zwischen dem Generator und der Rotorwelle, zwischen der Rotorwelle und dem Getriebe, oder zwischen dem Getriebe und dem Generator angebracht sein. Die beanspruchte Kupplung ist dabei kosteneffizient und weist eine gesteigerte Wartungs- und Reparaturfreundlichkeit auf.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleichen technischen Bedeutungen haben. Es zeigen im Einzelnen:
- FIG 1: eine schematische Schrägansicht einer ersten Ausführungsform der beanspruchten Kupplung;
- FIG 2: eine schematische Detail-Schnittansicht der ersten Ausführungsform der beanspruchten Kupplung;
- FIG 3: eine Detailansicht der ersten Ausführungsform der beanspruchten Kupplung vor einem Schritt des beanspruchten Herstellungsverfahrens;
- FIG 4: eine Detailansicht der ersten Ausführungsform der beanspruchten Kupplung nach einem Schritt des beanspruchten Herstellungsverfahrens;
- FIG 5: eine schematische Schrägansicht einer ersten Ausführungsform der beanspruchten Kupplung während vor einem Schritt des beanspruchten Herstellungsverfahrens;
- FIG 6: eine schematische Detailansicht einer dritten Ausführungsform der beanspruchten Kupplung;
- FIG 7: eine schematische Schnittansicht einer vierten Ausführungsform der beanspruchten Kupplung;
- FIG 8: eine Detailansicht einer fünften Ausführungsform der beanspruchten Kupplung;
- FIG 9: einen schematischen Ablauf einer Ausführungsform des beanspruchten Herstellungsverfahrens;
- FIG 10: einen schematischen Aufbau einer erfindungsgemäßen Industrieapplikation mit einem erfindungsgemäßen Wellenanordnung;
- FIG 11: einen schematischen Aufbau einer erfindungsgemäßen Windkraftanlage mit einer erfindungsgemäßen Kupplung;

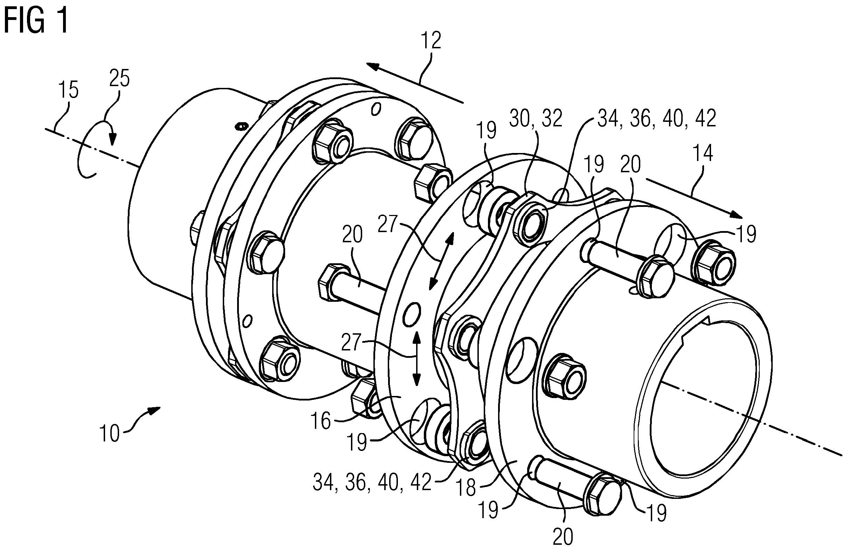

FIG 1 zeigt schematisch eine Kupplung 10 gemäß einer ersten Ausführungsform der Erfindung in einer Schrägansicht. Die Kupplung 10 umfasst eine erste Kupplungsseite 12, die korrespondierend einen ersten Kupplungsflansch 16 und einen zweiten Kupplungsflansch 18 aufweisen. Der erste und zweite Kupplungsflansch 16, 18 sind über ein Lamellenpaket 30 drehmomentübertragend miteinander verbunden. Bei einer Drehung um eine Hauptdrehachse 15 der Kupplung 10 wird eine Antriebsleistung 25 von der ersten Kupplungsseite 12 auf die zweite Kupplungsseite 14 übertragen. Das Lamellenpaket 30 umfasst eine Mehrzahl an Lamellen 32, die im Wesentlichen aufeinander geschichtet angeordnet sind und dazu ausgebildet sind, zu einem Übertragen der Antriebsleistung 25 eine Zugbeanspruchung 27 aufzunehmen. Zu einem Einleiten der Antriebsleistung 25 in das Lamellenpaket 30 ist dieses über Bolzen 20, die in Flanschbohrungen 19 aufgenommen sind, verbunden. Die Bolzen 19 sind umlaufend betrachtet alternierend mit dem ersten und dem zweiten Kupplungsflansch 16, 18 verbunden. Jede der Lamellen 32 weist eine Mehrzahl an Lamellenbohrungen 34 auf. Die Lamellen 32 sind im Lamellenpaket 30 derart angeordnet, dass die Lamellenbohrungen 32 fluchten und so Montageöffnungen 36 ausbilden. In den Montageöffnungen 36 wiederum ist jeweils eine Buchse 40 aufgenommen, an der jeweils ein Ring 42 befestigt ist.

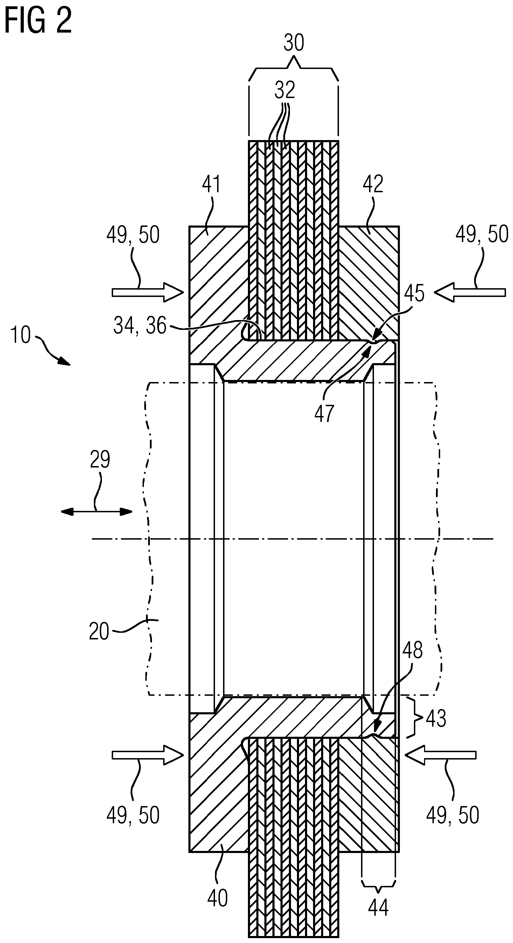

In FIG 2 ist schematisch eine Schnittansicht des Lamellenpakets 30 der in FIG 1 gezeigten ersten Ausführungsform der beanspruchten Kupplung 10 dargestellt. Im Einzelnen zeigt FIG 2 ein Lamellenpaket 30, das eine Mehrzahl an Lamellen 32 umfasst, deren Lamellenbohrungen 34 zu einer Montageöffnung 36 fluchtend angeordnet sind. Die Montageöffnung 36 ist dazu ausgebildet, einen nicht näher dargestellten Bolzen 20 aufzunehmen. In der Montageöffnung 36 ist dazu eine Buchse 40 angeordnet, die sich durch die Montageöffnung 36 erstreckt. Die Buchse 40 ist auf einer Seite des Lamellenpakets 30 mit einem Kragen 41 versehen, der ein Abstützen der Buchse 40 gegen das Lamellenpaket 30 erlaubt. Der Kragen 41 ist angeformt und einstückig mit einem ersten Endbereich 44 der Buchse 40 ausgebildet, der sich im Wesentlichen auf einer dem Kragen 41 abgewandten Seite des Lamellenpakets 30 befindet. Am ersten Endbereich 44 ist ein Ring 42 angeordnet, der lösbar mit der Buchse 40 verbunden ist. Dazu weist der Ring 42 an einer Innenfläche 53 eine Rastnase 45 auf, die in einer Rastnut 47 im ersten Endbereich 44 der Buchse 40 ausgebildet ist. Die Rastnase 45 und die Rastnut 47 sind zumindest teilweise umlaufend ausgebildet und erzeugen durch ihre Form einen Formschluss 48. Hierdurch wird eine Klippverbindung 43 verwirklicht. Durch den Formschluss 48 entlang einer Axialrichtung 29, die im Wesentlichen parallel zur Hauptdrehachse 15 nach FIG 1 ausgerichtet ist, wird eine ungewollte Demontage der verbundenen Einzelteile, also der Buchse 40, der Lamellen 32 und des Rings 42 verhindert. Dazu wird eine Haltekraft 49 ausgeübt.

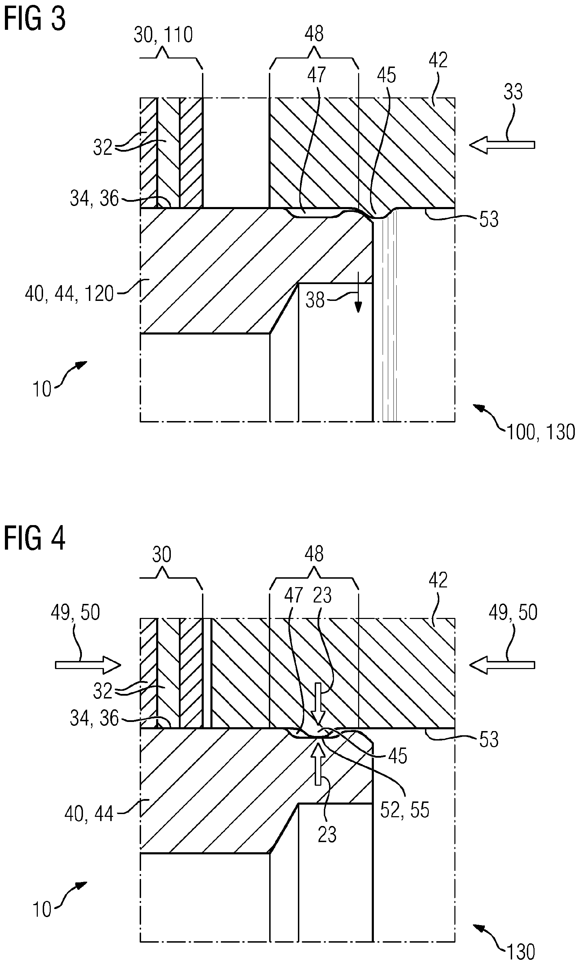

FIG 3 zeigt schematisch die erste Ausführungsform des Lamellenpakets 30 der in FIG 1 dargestellten beanspruchten Kupplung 10 vor einem dritten Schritt 130 des nicht näher dargestellten Herstellungsverfahren 100. FIG 3 geht davon aus, dass ein erster Schritt 110, in dem das Lamellenpaket 30, das mehrere Lamellen 32 umfasst, bereitgestellt wird, abgeschlossen ist. Ebenso geht FIG 3 davon aus, dass ein zweiter Schritt 120, in dem eine Buchse 40 in die Montageöffnungen 36 des Lamellenpakets 30 eingesetzt wird, abgeschlossen ist. Während des dritten Schritts 130 wird ein Ring 42 bereitgestellt, der durch eine Montagekraft 33 auf einen ersten Endbereich 44 der Buchse 40 aufgeschoben wird. Durch die Montagekraft 33 erfolgt durch eine Rastnase 45 an einer Innenfläche des Rings 42 eine elastische Verformung 38 der Buchse 40 im ersten Endbereich 44, so dass die Rastnase 45 in die Rastnut 47 einrastet. Durch die Rastnase 45 und die Rastnut 47 wird ein Formschluss 48 erzeugt, durch den der Ring 42 zuverlässig und stabil an der Buchse 40 befestigt ist. Im montierten Zustand des Rings 42 und der Buchse 40 ist die Buchse 40 dazu geeignet, einen Bolzen 20 zum Endmontage einer Kupplung 10 wie in FIG 1 aufzunehmen. Dadurch wird eine lösbare Verbindung zwischen dem Ring 42 und der Buchse 40 gebildet, insbesondere eine Kippverbindung 43 verwirklicht.

Korrespondierend zu FIG 3 ist in FIG 4 das Lamellenpaket 30 der ersten Ausführungsform der beanspruchten Kupplung 10 nach einer Durchführung des dritten Schritts 130 dargestellt. Über die Rastnase 45 steht der Ring 42 nach einem Einrasten in der Rastnut 47 in einem Kontaktbereich 52 in Kontakt mit dem ersten Endbereich 44 der Buchse 40. Zwischen der Rastnase 45 und der Rastnut 47 liegt eine Pressung vor, durch die zusätzlich zum Formschluss 48 ein Kraftschluss 55 hervorgerufen wird. Der Kontaktbereich 52, und damit auch der Kraftschluss 55 zwischen dem Ring 42 und der Buchse 40 ist zumindest teilweise umlaufend ausgebildet. Der Ring 42 und die Buchse 40 sind aus einem metallischen Werkstoff hergestellt, so dass eine entsprechend hohe Rückstellkraft 23 in diesen hervorgerufen wird, die einen entsprechend belastbaren Kraftschluss 55 erzeugen. Das Zusammenwirken des Formschlusses 48 und des Kraftschlusses 55 bietet für die lösbare Verbindung des Rings 42 mit der Buchse 40 ein hohes Maß an Festigkeit Der Formschluss 48 verhindert ein Herunterfallen des Ringes von der Buchse. Der Kraftschluss 55 bewirkt, dass ein möglicherweise vorhandenes axiales Spiel der Formschlüssigen Verbindung nicht direkt zu einem Vibrieren, also einem Klappern, des Ringes auf der Buchse führt. Insgesamt wird eine Haltekraft 49 ausgeübt.

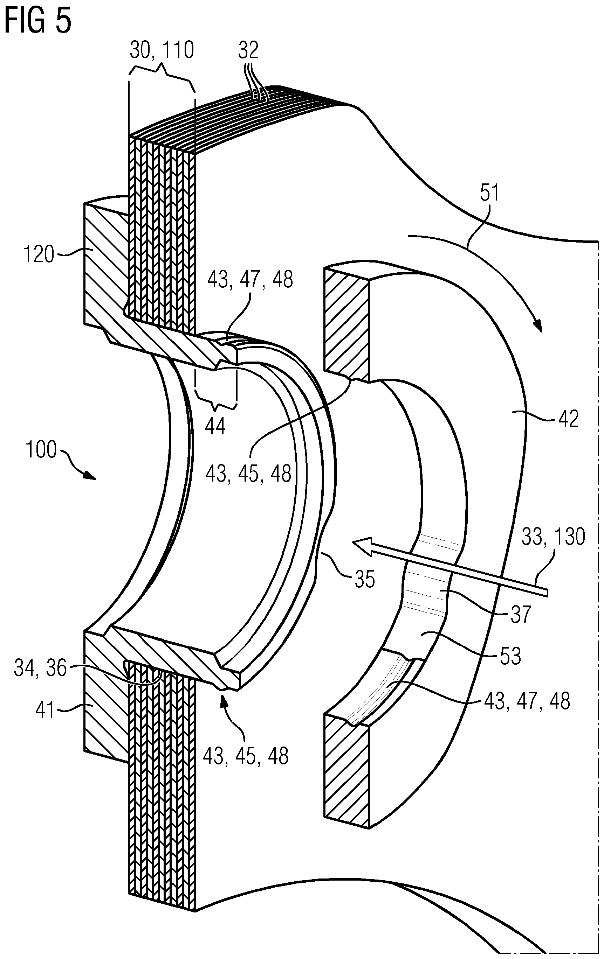

In FIG 5 ist in einer geschnittenen Schrägansicht eine zweite Ausführungsform des Lamellenpakets 30 der beanspruchten Kupplung 10 dargestellt. Im Einzelnen zeigt FIG 5 die erste Ausführungsform während eines dritten Schritts 130 eines erfindungsgemäßen Herstellungsverfahrens 100. FIG 5 geht davon aus, dass ein erster Schritt 110, in dem das Lamellenpaket 30, das mehrere Lamellen 32 umfasst, bereitgestellt wird, abgeschlossen ist. FIG 5 geht auch davon aus, dass ein zweiter Schritt 120, in dem eine Buchse 40 mit einem Kragen 41 in die Montageöffnungen 36 des Lamellenpakets 30 eingesetzt wird, abgeschlossen ist. Dabei wird die Montageöffnung 36 durch mehrere Lamellenbohrungen 36 gebildet, die fluchtend angeordnet sind. Während des dritten Schritts 130 wird ein Ring 42 bereitgestellt, der durch eine Montagekraft 33 auf einen ersten Endbereich 44 der Buchse 40 aufgeschoben wird. In einem ersten Endbereich 44 der Buchse 40 sind eine Rastnut 47 und eine Rastnase 45 ausgebildet. Die Rastnut 47 und die Rastnase 45 im ersten Endbereich 44 sind an der Buchse 40 entlang einer Umfangsrichtung 51 durch eine Ausrichtnut 35 beanstandet. Korrespondierend dazu ist an einer Innenfläche 53 des Rings 42 mit einer Rastnut 47 und einer Rastnase 45 ausgebildet. Die Rastnut 47 und die Rastnase 45 sind am Rings 42 durch eine Ausrichtfeder 37 beabstandet. Die Ausrichtnut 35 der Buchse 40 ist zu einem Aufnehmen der Ausrichtfeder 37 des Rings 42 ausgebildet. Dadurch wird eine exakte Winkelpositionierung des Rings 42 aus dem Lamellenpaket 30 gewährleistet. Alternativ kann die Ausrichtfeder 37 auch an der Buchse 40 und die Ausrichtnut 35 am Rings 42 ausgebildet sein. In montierten Zustand wird durch die Rastnase 45 an der Buchse 40 und der Rastnut 47 am Ring 42 ein Formschluss 48 hergestellt. Somit wird zwischen dem Ring 42 und der Buchse 40 eine lösbare Verbindung, insbesondere eine Klippverbindung 43, hergestellt. Ferner ist eine Mehrzahl an Ringen 42 an einer entsprechenden Mehrzahl an Buchsen 40 an einem Lamellenpaket 30 wie in FIG 5 dargestellt gleichzeitig montierbar. Dazu wird jeweils die Montagekraft 33 beispielsweise durch einen nicht gezeigten Stempel ausgeübt.

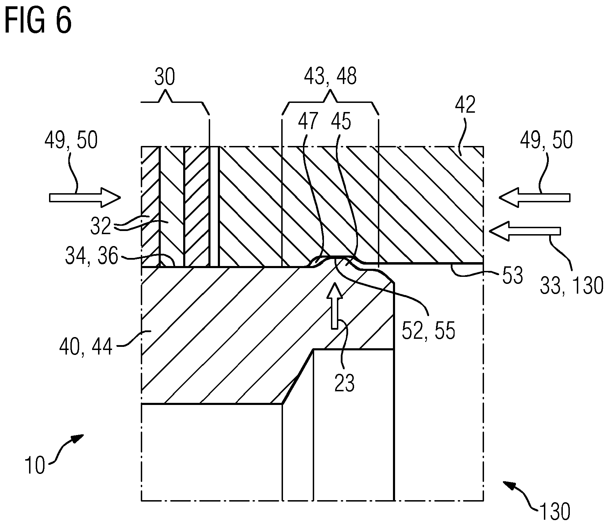

Die FIG 6 zeigt eine schematische Detailansicht einer dritten Ausführungsform des Lamellenpakets 30 der beanspruchten Kupplung 10. Das Lamellenpaket 30 ist in einem montierten Zustand gezeigt und weist eine Buchse 40 mit einem ersten Endabschnitt 44 auf, auf den ein Ring 42 aufgeschoben ist. Die Buchse 40 ist in einer Montageöffnung 36 angeordnet, die durch fluchtend angeordnete Lamellenbohrungen 34 gebildet werden. Der Ring 42 liegt an einem Lamellenpaket 30 an, das eine Mehrzahl an Lamellen 32 umfasst. Im ersten Endbereich 44 der Buchse 40 ist eine Rastnase 45 ausgebildet, die in eine Rastnut 47 am Ring 42 eingreift. Durch die Rastnase 45 und die Rastnut 47 wird ein Formschluss 48 hervorgerufen, durch den der Ring 42 und die Buchse 40 relativ zueinander in Position gehalten werden. Durch die Rastnase 45, die unter Druck in der Rastnut 47 an einer Innenfläche 53 der Rings 42 in einem Kontaktbereich 52 anliegt, wird zusätzlich ein Kraftschluss 55 erzeugt. Der Ring 42 und die Buchse 40 bilden dadurch insgesamt eine lösbare Verbindung, insbesondere eine Klippverbindung 43. Beim Montieren des Rings 42, also bei einem Andrücken mit einer Montagekraft 33 in einem dritten Verfahrensschritt 130, wird eine Presskraft 49 auf das Lamellenpaket 30 ausgeübt.

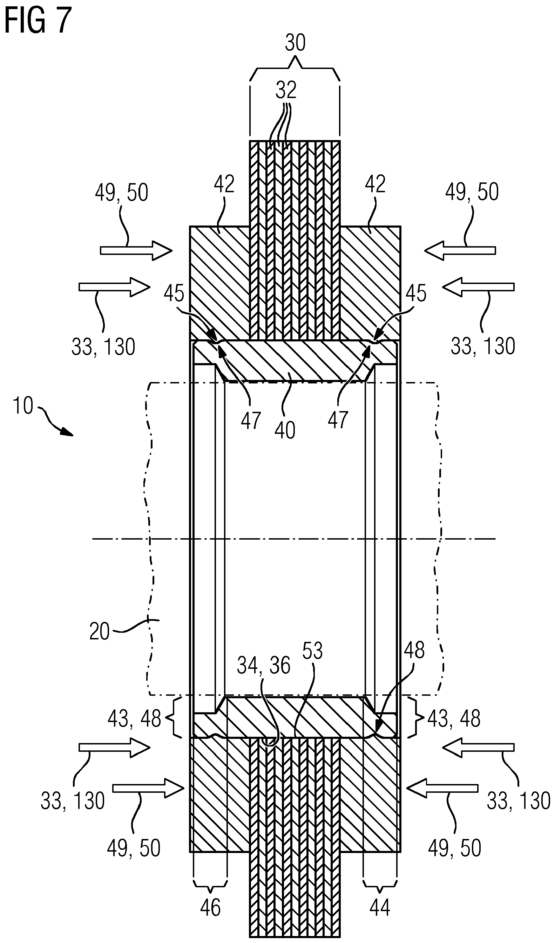

Ferner zeigt FIG 7 eine schematische Schnittansicht einer vierten Ausführungsform des Lamellenpakets 30 der beanspruchten Kupplung 10. Das Lamellenpaket 30 weist eine Mehrzahl an Lamellen 32 auf. In den Lamellen 32 sind Lamellenbohrungen 34 ausgebildet, die fluchtend angeordnet sind. Die Lamellenbohrungen 34 bilden so zusammen eine Montagebohrung 36, die zum Aufnehmen eines nicht näher gezeigten Bolzens 20 ausgebildet ist. In der Montageöffnung 36 ist eine Buchse 40 ausgebildet, die einen ersten und einen zweiten Endbereich 44, 46 aufweist. An jedem der beiden Endbereiche 44, 46 ist ein Ring 42 angebracht, durch den die Buchse 40 am Lamellenpaket 30 gehalten wird. In den voneinander abgewandten Endbereichen 44, 46 der Buchse 40 ist jeweils eine Rastnut 47 ausgebildet, die umlaufend ausgebildet ist. Die Ringe 42 weisen an ihren Innenflächen 53 jeweils eine Rastnase 45 auf, die korrespondierend zur Rastnut 47 ausgebildet ist. Die Rastnase 45 und die Rastnut 47 sind im montierten Zustand, also nach einem dritten Verfahrensschritt 130, ineinander eingerastet und bilden einen Formschluss 48. Insgesamt bilden die Ringe 42 und die Buchse 40 jeweils eine Klippverbindung 43 an beiden Endbereichen 44, 46 aus. Während des dritten Verfahrensschritts 130 wird eine Montagekraft 33 ausgeübt, durch die die Ringe 42 und die Buchse 40 gegenseitig einrasten und so das Prinzip einer Klippverbindung 43 verwirklichen und so eine lösbare Verbindung bereitstellen. Durch die Montagekraft 33 wird auf das Lamellenpaket 30 eine Haltekraft 49 ausgeübt. Die Ausführungsform gemäß FIG 7 basiert mit der Buchse 40 und den Ringen 42 auf geometrisch einfachen Komponenten, die schnell und kosteneffizient herstellbar sind. Die Bauteilvielfalt wird so bei der Herstellung der Kupplung 10 begrenzt, was wiederum zu einer einfacheren Produktion führt.

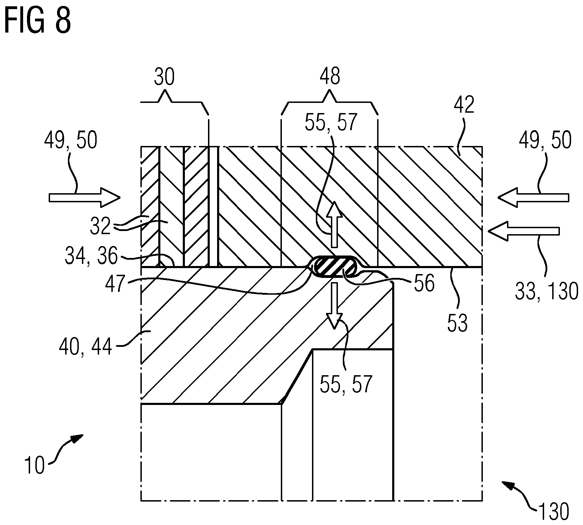

Eine fünfte Ausführungsform des Lamellenpakets 30 der beanspruchten Kupplung 10 ist in einer Detailansicht in FIG 8 dargestellt. Das Lamellenpaket 30 weist eine Mehrzahl an Lamellen 32 auf, in denen Lamellenbohrungen 34 ausgebildet sind. Die Lamellenbohrungen 34 sind fluchtend angeordnet und bilden so eine Montageöffnung 36, in der eine Buchse 40 aufgenommen ist. An einem ersten Endbereich 44 der Buchse 40 ist eine Rastnut 47 ausgebildet. Auch an einer Innenfläche 53 des Rings 42 ist eine Rastnut 47 ausgebildet, die im Wesentlichen der Rastnut 47 im ersten Endbereich 48 der Buchse 40 gegenüberliegend angeordnet ist. In den Rastnuten 47 ist ein Zwischenring 56 angeordnet, der aus einem Elastomer oder einem metallischen Werkstoff hergestellt ist. Infolgedessen wird durch den Zwischenring 56 eine Rückstellkraft 57 auf die Innenfläche 53 des Rings 42 und den ersten Endbereich 44 der Buchse 40 ausgeübt. Hierdurch wird mittels des Zwischenrings 56 ein indirekter Formschluss 48 zwischen dem Ring 42 und der Buchse 40 hergestellt. Ferner ist die Verbindung zwischen dem Ring 42 und der Buchse 40 unter Quetschen des Zwischenrings 56 lösbar. Korrespondierend hierzu wird beim Montieren, also einem dritten Verfahrensschritt 130, eine Montagekraft 33 auf den Ring 42 ausgeübt, die eine hinreichende Verformung des Zwischenrings 56 erlaubt. Zusätzlich wird durch die Rückstellkraft 57 des Zwischenrings 56 ein Kraftschluss 55 hergestellt. Durch die aufgebrachte Montagekraft 33 wird auf das Lamellenpaket 30 eine Haltekraft 49 ausgeübt.

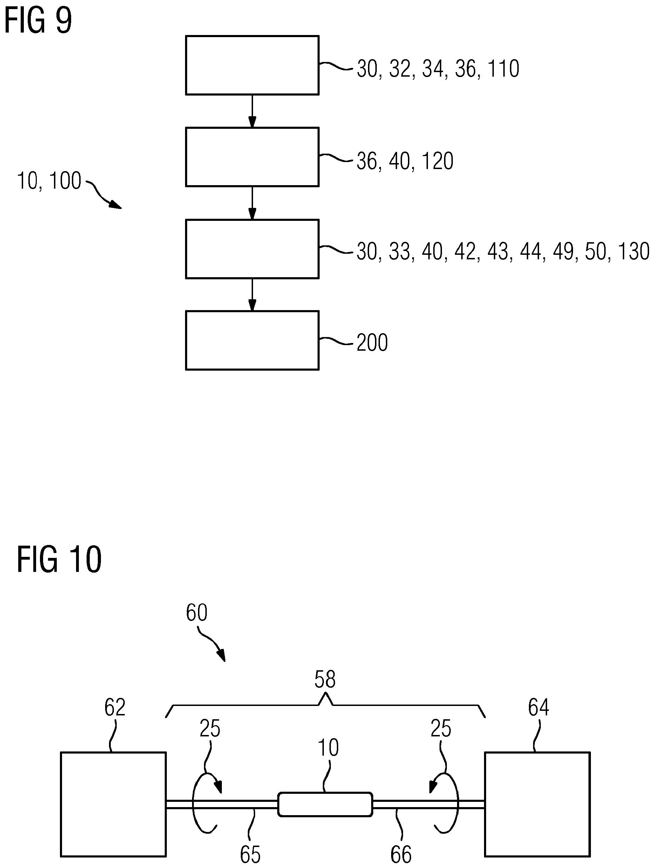

In FIG 9 ist schematisch eine Ablauf einer Ausführungsform des beanspruchten Verfahrens 100 zur Herstellung einer Kupplung 10 dargestellt. Das Verfahren 100 geht von einem ersten Verfahrensschritt 110 aus, in dem ein Lamellenpaket 30 bereitgestellt wird, das eine Mehrzahl an Lamellen 32 aufweist. Die Lamellen 32 weisen Lamellenbohrungen 34 auf, die fluchtend zu den Montageöffnungen 36 ausgerichtet angeordnet sind. Ein Lamellenpaket 30 weist dabei eine Mehrzahl an Montageöffnungen 36 auf. Es folgt ein zweiter Verfahrensschritt 120, in dem Buchsen 40 bereitgestellt und in die Montageöffnungen 36 eingesetzt werden. Die Buchsen 40 können dabei in gleicher Orientierung oder in gegenläufiger Orientierung eingesetzt werden. Es folgt ein dritter Verfahrensschritt 130, in dem je Buchse 40 ein Ring 42 bereitgestellt wird. Die Ringe 42 werden durch eine Montagekraft 33 an die jeweilige Buchse 40 an einem ersten Endbereich 44 der Buchse 40 gedrückt. Die Buchse 40 und der Ring 42 sind dazu ausgebildet, formschlüssig miteinander verbunden zu werden, beispielsweise durch eine Klippverbindung 43. Beim Aufbringen der Montagekraft 33 wird auf das Lamellenpaket 30 eine Presskraft 49 ausgeübt. Zwischen dem Ring 42 und der Buchse 40 wird jeweils ein Formschluss 48 ausgebildet. Die Montagekraft 33 für die jeweiligen Buchsen 40 und Ringe 42 kann dabei mittels eines gemeinsamen Stempels erzeugt werden. Dadurch werden mehrere Buchsen 40 im Wesentlichen gleichzeitig mit einem Ring 42 lösbar verbunden. Infolgedessen ist das Verfahren 100 gemäß FIG 9 einfach und schnell durchführbar. Mittels des Verfahrens 100 nach FIG 9 sind insbesondere Kupplungen 10 gemäß den FIG 1 bis FIG 8 herstellbar.

FIG 10 zeigt schematisch den Aufbau einer beanspruchten Industrieapplikation 60 dargestellt, die eine Antriebseinheit 62 und eine mechanische Anwendung 64 aufweist. Durch die Antriebseinheit 62 eine Antriebsleistung 25 bereitgestellt, die zum Betrieb der mechanischen Anwendung 64 verwendet wird, die beispielweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung Müllpresse oder Schrottpresse ausgebildet sein kann. Die Antriebsleistung 25 wird über eine erste Welle 65 zu einer Kupplung 10 geführt, die wiederum mit einer zweiten Welle 66 verbunden ist. Die Kupplung 10 bildet zusammen mit der ersten und zweiten Welle 65, 66 eine Wellenanordnung 58. Mittels der Kupplung 10 wird zwischen der Antriebseinheit 62 und der mechanischen Anwendung 64 eine drehmomentübertragende Verbindung hergestellt. Die Kupplung 10 ist dabei gemäß einer der oben skizzierten Ausführungsformen ausgebildet und/oder nach einem der oben beschriebenen Verfahren 100 herstellbar.

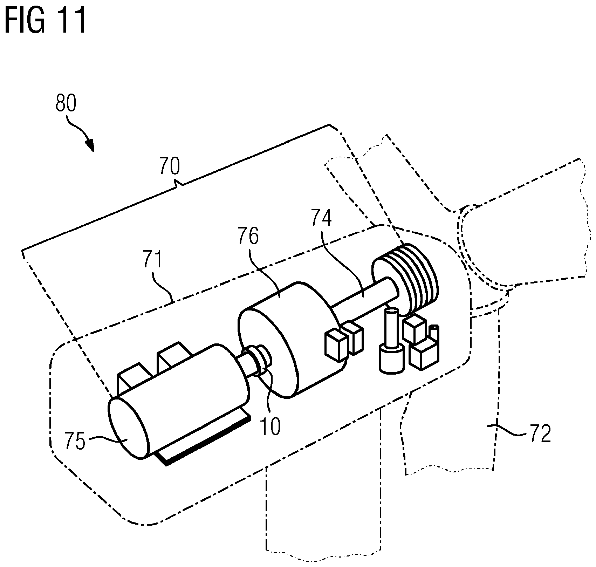

In FIG 11 ist schematisch der Aufbau einer beanspruchten Windkraftanlage 80 dargestellt. Die Windkraftanlange 80 umfasst eine Gondel 71, an der ein Rotor 72 angebracht ist. Der Rotor 72 ist über eine Rotorwelle 74 drehmomentübertragend mit einem Getriebe 76 gekoppelt, das als Planetengetriebe ausgebildet ist. Das Getriebe 76 wiederum ist drehmomentübertragend mit einem Generator 75 verbunden. Zwischen dem Getriebe 76 und dem Generator 75 ist eine Kupplung 10 angebracht. Die Kupplung 10 ist dabei gemäß einer der oben beschriebenen Ausführungsformen ausgebildet.

## Patentansprüche

1. Kupplung (10), umfassend eine Mehrzahl an Lamellen (32), die ein Lamellenpaket (30) bilden, wobei in den Lamellen (32) Lamellenbohrungen (34) ausgebildet sind, die zu zumindest einer Montageöffnung (36) fluchtend angeordnet sind, wobei in der zumindest einen Montageöffnung (36) eine Buchse (40) aufgenommen ist, die aus einem metallischen Werkstoff hergestellt ist
wobei die Buchse (40) in zumindest einem ersten Endbereich (44) mit einem Ring verbunden ist und zur einer in eine Axialrichtung (29) formschlüssigen Verbindung mit dem Ring (42) ausgebildet ist, **dadurch gekennzeichnet, dass**
die Buche (40) und/oder der Ring (42) zu einem lösbaren Verbinden verformbar ausgebildet sind, und die Buchse (40) nach einem Lösen wiederverwendbar ist.

2. Kupplung (10) nach Anspruch 1, **dadurch gekennzeichnet, dass** die lösbare Verbindung zwischen der Buchse (40) und dem Ring (42) durch eine Rückstellkraft (23) der Buchse (40) und/oder des Rings (42) hergestellt ist.

3. Kupplung (10) nach einem der Ansprüche 1 oder 2, **dadurch gekennzeichnet, dass** in einem montierten Zustand zusätzlich zum Formschluss ein Kraftschluss (55) zwischen der Buchse (40) und dem Ring (42) vorliegt.

4. Kupplung (10) nach einem der Ansprüche 1 bis 3, **dadurch gekennzeichnet, dass** die Buchse (40) mittels einer Klippverbindung (43) lösbar mit dem Ring (42) verbunden ist.

5. Kupplung (10) nach einem der Ansprüche 1 bis 4, **dadurch gekennzeichnet, dass** der Ring (42) aus einem metallischen Werkstoff oder einem Kunststoff hergestellt ist.

6. Kupplung (10) nach einem der Ansprüche 1 bis 5, **dadurch gekennzeichnet, dass** die Buchse (40) einseitig einen Kragen (41) aufweist oder beidseitig jeweils mit einem Ring (42) formschlüssig verbindbar ist.

7. Kupplung (10) nach einem der Ansprüche 3 bis 6, **dadurch gekennzeichnet, dass** im montierten Zustand zwischen der Buchse (40) und dem Ring (42) ein Zwischenring (56) zur Herstellung des Kraftschlusses (55) und/oder Formschlusses (48) angeordnet ist.

8. Kupplung (10) nach einem der Ansprüche 1 bis 7, **dadurch gekennzeichnet, dass** der Ring (42) mit der Buchse (42) mittels einer Montagekraft (33) von bis zu 15 kN, bevorzugt von bis zu 10 kN, weiter bevorzugt von bis zu 8 kN, besonders bevorzugt von bis zu 6,5 kN formschlüssig verbindbar ist.

9. Verfahren (100) zum Herstellen einer Kupplung (10) nach einem der Ansprüche 1-8, umfassend die Schritte:
a) Bereitstellen eines Lamellenpakets (30) mit einer Mehrzahl an Montageöffnungen (36);
b) Einsetzen von Buchsen (40) in die Montageöffnungen (36) im Lamellenpaket (34);
c) Verbinden der Buchsen (40) mit jeweils einem Ring (42) durch ein Andrücken der Ringe (42);
wobei im Schritt c) eine in eine Axialrichtung (29) formschlüssige Verbindung zwischen den Buchsen (40) und den jeweiligen Ringen (42) hergestellt wird und die Buchsen (40) aus einem metallischen Werkstoff hergestellt sind, **dadurch gekennzeichnet, dass** im Schritt c) die Ringe (42) im Wesentlichen gleichzeitig mit den jeweiligen Buchsen (40) verbunden werden,
wobei mindestens eine der formschlüssigen Verbindungen zwischen den Buchsen (40) und den jeweiligen Ringen (42) lösbar ausgebildet ist.

10. Wellenanordnung (58), umfassend eine erste Welle (65), die über eine Kupplung (10) mit einer zweiten Welle (66) drehmomentübertragend verbunden ist, **dadurch gekennzeichnet, dass** die Kupplung (10) gemäß zumindest einem der Ansprüche 1 bis 8 ausgebildet ist.

11. Industrieapplikation (60), umfassend eine Antriebseinheit (62) und eine mechanische Anwendung (64), wobei die Antriebseinheit (62) eine erste Welle (65) aufweist und die mechanische Anwendung (64) eine zweite Welle (66) aufweist, die über eine Kupplung (10) drehmomentübertragend miteinander verbunden sind, **dadurch gekennzeichnet, dass** die erste Welle (65), die zweite Welle (66) und die Kupplung (10) zu einer Wellenanordnung (50) nach Anspruch 10 gehören.

12. Windkraftanlage (80), umfassend einen Rotor (72), der mit einer Rotorwelle (74) verbunden ist, die zu einem Antriebsstrang (70) zum Antreiben eines Generators (75) gehört, **dadurch gekennzeichnet, dass** der Antriebsstrang (70) eine Kupplung (10) nach einem der Ansprüche 1 bis 8 aufweist.

## Claims

1. Coupling (10) comprising a plurality of discs (32) which form a disc pack (30), wherein disc bores (34) are formed in the discs (32) and are arranged so as to be in alignment with at least one mounting opening (36), wherein a bushing (40) produced from a metallic material is received in the at least one mounting opening (36), wherein the bushing (40) is connected to a ring in at least one first end region (44) and is configured to form a connection with the ring (42) that is form-fitting in an axial direction (29), **characterized in that** the bushing (40) and/or the ring (42) are/is of deformable configuration to form a releasable connection, and the bushing (40) can be reused after release.

2. Coupling (10) according to Claim 1, **characterized in that** the releasable connection between the bushing (40) and the ring (42) is produced by a restoring force (23) of the bushing (40) and/or of the ring (42).

3. Coupling (10) according to either of Claims 1 and 2, **characterized in that**, in a mounted state, a force fit (55) is present between the bushing (40) and the ring (42) in addition to the form fit.

4. Coupling (10) according to one of Claims 1 to 3, **characterized in that** the bushing (40) is releasably connected to the ring (42) by means of a clip connection (43) .

5. Coupling (10) according to one of Claims 1 to 4, **characterized in that** the ring (42) is produced from a metallic material or a plastic.

6. Coupling (10) according to one of Claims 1 to 5, **characterized in that** the bushing (40) has a collar (41) on one side or can be form-fittingly connected to a respective ring (42) on both sides.

7. Coupling (10) according to one of Claims 3 to 6, **characterized in that**, in the mounted state, an intermediate ring (56) for producing the force fit (55) and/or form fit (48) is arranged between the bushing (40) and the ring (42).

8. Coupling (10) according to one of Claims 1 to 7, **characterized in that** the ring (42) can be form-fittingly connected to the bushing (42) by means of a mounting force (33) of up to 15 kN, preferably of up to 10 kN, further preferably of up to 8 kN, particularly preferably of up to 6.5 kN.

9. Method (100) for producing a coupling (10) according to one of Claims 1-8, comprising the steps:
a) providing a disc pack (30) with a plurality of mounting openings (36);
b) inserting bushings (40) into the mounting openings (36) in the disc pack (34);
c) connecting the bushings (40) to a respective ring (42) by pressing them against the rings (42);
wherein, in step c), a connection that is form-fitting in an axial direction (29) is produced between the bushings (40) and the respective rings (42) and the bushings (40) are produced from a metallic material, **characterized in that**, in step c), the rings (42) are connected to the respective bushings (40) substantially at the same time,
wherein at least one of the form-fitting connections between the bushings (40) and the respective rings (42) is of releasable configuration.

10. Shaft arrangement (58) comprising a first shaft (65) which is connected to a second shaft (66) in a torque-transmitting manner via a coupling (10), **characterized in that** the coupling (10) is configured in accordance with at least one of Claims 1 to 8.

11. Industrial application (60) comprising a drive unit (62) and a mechanical application (64), wherein the drive unit (62) has a first shaft (65) and the mechanical application (64) has a second shaft (66), said shafts being connected to one another in a torque-transmitting manner via a coupling (10), **characterized in that** the first shaft (65), the second shaft (66) and the coupling (10) form part of a shaft arrangement (50) according to Claim 10.

12. Wind turbine (80) comprising a rotor (72) which is connected to a rotor shaft (74) which forms part of a drive train (70) for driving a generator (75), **characterized in that** the drive train (70) has a coupling (10) according to one of Claims 1 to 8.

## Revendications

1. Accouplement (10), comprenant une pluralité de lamelles (32) qui constituent un paquet de lamelles (30), dans lequel, dans les lamelles (32), des alésages de lamelles (34) sont réalisés qui sont disposés en alignement avec au moins une ouverture de montage (36), dans lequel, dans ladite au moins une ouverture de montage (36), une douille (40) est reçue qui est fabriquée dans un matériau métallique, la douille (40) étant reliée à une bague dans au moins une première zone d'extrémité (44) et étant réalisée pour un assemblage par complémentarité de forme avec la bague (42) dans une direction axiale (29),
**caractérisé en ce que** la douille (40) et/ou la bague (42) est/sont réalisée(s) de manière déformable en vue d'un assemblage détachable, et **en ce que** la douille (40) une fois détachée est réutilisable.

2. Accouplement (10) selon la revendication 1, **caractérisé en ce que** l'assemblage détachable entre la douille (40) et la bague (42) est établi par une force de rappel (23) de la douille (40) et/ou de la bague (42) .

3. Accouplement (10) selon l'une quelconque des revendications 1 ou 2, **caractérisé en ce que** dans un état monté, il existe entre la douille (40) et la bague (42) un assemblage par adhérence (55) en plus de l'assemblage par complémentarité de forme.

4. Accouplement (10) selon l'une quelconque des revendications 1 à 3, **caractérisé en ce que** la douille (40) est reliée de manière détachable à la bague (42) au moyen d'un assemblage par encliquetage (43).

5. Accouplement (10) selon l'une quelconque des revendications 1 à 4, **caractérisé en ce que** la bague (42) est fabriquée à partir d'un matériau métallique ou d'une matière plastique.

6. Accouplement (10) selon l'une quelconque des revendications 1 à 5, **caractérisé en ce que** la douille (40) présente d'un côté une collerette (41) ou peut être assemblée des deux côtés respectivement à une bague (42) par complémentarité de forme.

7. Accouplement (10) selon l'une quelconque des revendications 3 à 6, **caractérisé en ce qu'**à l'état monté, une bague intermédiaire (56) est disposée entre la douille (40) et la bague (42) pour créer l'assemblage par adhérence (55) et/ou l'assemblage par complémentarité de forme (48).

8. Accouplement (10) selon l'une quelconque des revendications 1 à 7, **caractérisé en ce que** la bague (42) peut être assemblée par complémentarité de forme à la douille (42) au moyen d'une force de montage (33) de jusqu'à 15 kN, de préférence de jusqu'à 10 kN, de plus grande préférence de jusqu'à 8 kN, de manière particulièrement préférée de jusqu'à 6,5 kN.

9. Procédé (100) de fabrication d'un accouplement (10) selon l'une quelconque des revendications 1 à 8, comprenant les étapes consistant à :
a) fournir un paquet de lamelles (30) doté d'une pluralité d'ouvertures de montage (36) ;
b) insérer des douilles (40) dans les ouvertures de montage (36) dans le paquet de lamelles (34) ;
c) assembler les douilles (40) respectivement avec une bague (42) par serrage des bagues (42) ;
dans lequel, à l'étape c), un assemblage par complémentarité de forme est créé entre les douilles (40) et les bagues (42) respectives dans la direction axiale (29), et les douilles (40) sont fabriquées dans un matériau métallique,
**caractérisé en ce qu'**à l'étape c), les bagues (42) sont assemblées substantiellement en même temps avec les douilles (40) respectives,
au moins l'un des assemblages par complémentarité de forme entre les douilles (40) et les bagues (42) respectives étant réalisé de manière détachable.

10. Ensemble d'arbres (58), comprenant un premier arbre (65) qui est assemblé en transmission de couple avec un deuxième arbre (66) par l'intermédiaire d'un accouplement (10), **caractérisé en ce que** l'accouplement (10) est réalisé selon au moins l'une des revendications 1 à 8.

11. Application industrielle (60), comprenant une unité d'entraînement (62) et une application mécanique (64), l'unité d'entraînement (62) présentant un premier arbre (65), et l'application mécanique (64) présentant un deuxième arbre (66) qui sont assemblés l'un avec l'autre en transmission de couple par l'intermédiaire d'un accouplement (10), **caractérisée en ce que** le premier arbre (65), le deuxième arbre (66) et l'accouplement (10) font partie d'un ensemble d'arbres (50) selon la revendication 10.

12. Eolienne (80), comprenant un rotor (72) qui est assemblé avec un arbre de rotor (74) qui fait partie d'une chaîne cinématique (70) pour entraîner un générateur (75), **caractérisé en ce que** la chaîne cinématique (70) présente un accouplement (10) selon l'une quelconque des revendications 1 à 8.
